# EUROPÄISCHE PATENTANMELDUNG

(11) **EP 4 283 061 A1**
(43) Veröffentlichungstag der Anmeldung: **29.11.2023**
(21) Anmeldenummer: 23174880.7
(22) Anmeldetag: 23.05.2023
(51) Int. Cl.: E03F 7/12, F16L 55/26, G03B 37/00, G05D 1/00, H04N 23/50

(54) **KANALROHRINSPEKTIONSSYSTEM SOWIE VERFAHREN ZUR STEUERUNG EINES KANALROHRINSPEKTIONSSYSTEMS**

(30) Priorität: 24.05.2022 DE 102022205181
(71) Anmelder: IBAK Helmut Hunger GmbH & Co. KG, 24148 Kiel (DE)
(72) Erfinder: Böttcher, Marcus, 24148 Kiel (DE); Kürschner, Harald, 24148 Kiel (DE)
(74) Vertreter: Patentanwälte Vollmann Hemmer Lindfeld Partnerschaft mbB

(57) **Zusammenfassung**

Die Erfindung betrifft ein Kanalrohrinspektionssystem mit einer Vorschubeinrichtung (2), zumindest einer an dieser befestigten Kamera (8) sowie einer Steuereinrichtung (14), wobei die Steuereinrichtung eine sprach- und/oder bildbasierte Eingabevorrichtung (30, 32) aufweist, welche ausgebildet ist, akustische Kommandos (36) und/oder erfasste Gesten (34) einer Bedienperson als Steuerbefehle zu erfassen, und die Steuereinrichtung (14) zur Steuerung zumindest einer Komponente des Kanalrohrinspektionssystems auf Grundlage dieser erfassten Steuerbefehle ausgebildet ist, sowie ein Verfahren zur Steuerung eines solchen Kanalrohrinspektionssystems.

## Beschreibung

Kanalrohrinspektionssysteme werden eingesetzt, um Kanalrohre und Schächte auf Beschädigungen oder Funktionsstörungen zu untersuchen und ggf. Reparaturen bzw. Sanierungen im Kanalrohr durchzuführen. Dabei sind Systeme mit angetriebenen Fahrwagen bekannt, welche durch das Kanalrohr fahren. Ferner gibt es Systeme, bei welchen eine Inspektionseinheit, insbesondere eine Kamera mit Hilfe eines Schiebestabes durch das Kanalrohr geschoben wird. Im Falle von Schächten kann eine Inspektionseinheit in den Schacht an zumindest einem Seil herabgelassen werden. Im Inneren des Kanalrohres können verschiedene Aktionen, beispielsweise Bearbeitungsaufgaben bei der Sanierung oder auch Aktionen zum Bewegen zumindest einer Kamera durchgeführt werden, welche von außerhalb des Kanalrohrs vor einer Bedienperson gesteuert werden.

Es ist Aufgabe der Erfindung, die Steuerung eines Kanalrohrinspektionssystems für eine Bedienperson zu vereinfachen. Diese Aufgabe wird gelöst durch ein Kanalrohrinspektionssystem mit den in Anspruch 1 angegebenen Merkmalen sowie durch ein Verfahren zur Steuerung eines Kanalrohrinspektionssystems mit den in Anspruch 13 angegebenen Merkmalen. Bevorzugte Ausführungsformen ergeben sich aus den zugehörigen Unteransprüchen sowie der nachfolgenden Beschreibung.

Das erfindungsgemäße Kanalrohrinspektionssystem weist eine Vorschubeinrichtung und zumindest eine an dieser Vorschubeinrichtung befestigte Kamera auf. Die Vorschubeinrichtung kann dabei beispielsweise ein Fahrwagen mit motorisch angetriebenen Rädern oder beispielsweise ein Schiebestab sein, welcher mittels einer Vorschubeinrichtung, welche außerhalb des Kanalrohres oder aber auch auf einem Fahrwagen angeordnet sein kann, vorgeschoben werden kann. Es kann aber auch jede andere Vorschubeinrichtung verwendet werden, welche geeignet ist, eine Kamera durch das Kanalrohr zu bewegen. Als Kanalrohrinspektionssystem im Sinne der Erfindung ist auch ein Schachtinspektionssystem zu verstehen, bei welchem die Vorschubeinheit beispielsweise von einer Seilwinde gebildet wird, über welche eine Inspektionseinheit und insbesondere eine Kamera definiert in einen Schacht herabgelassen und in diesem bewegt werden kann. Auch bei der Schachtinspektion können alle Arten von Vorschubeinrichtungen Verwendung finden, welche geeignet sind, eine Kamera durch einen Schacht zu bewegen. Die Kamera kann direkt an der Vorschubeinrichtung befestigt sein oder aber Teil eines an der Vorschubeinrichtung befestigten Inspektionsgeräts sein.

Das Kanalrohrinspektionssystem weist ferner eine Steuereinrichtung auf, welche vorzugsweise bei der Anwendung außerhalb des Kanalrohres verbleibt und ein Inspektionsgerät und insbesondere eine Kamera, welche durch das Kanalrohr vorgeschoben wird, steuert. Dazu kann das Inspektionsgerät bzw. die Kamera mit der Steuereinrichtung über eine Datenverbindung, beispielsweise in Form eines Kabels verbunden sein. Ein solches Kabel kann in die Vorschubeinrichtung, beispielsweise einen Schiebestab integriert sein. Die Steuereinrichtung kann beispielsweise den Vorschub eines Inspektionsgerätes bzw. der Kamera im Kanalrohr steuern und weiter bevorzugt auch die Kamera selber steuern, beispielsweise um deren Blickrichtung zu verändern, die Brennweite zu verändern oder ähnliches. Darüber hinaus können zusätzliche Aktionen oder Geräte, beispielsweise Start und Stopp von Bearbeitungswerkzeugen, Spülvorgänge, Einstellung der Beleuchtung und ähnliches über die Steuereinrichtung eingestellt werden. Die Steuereinrichtung weist erfindungsgemäß eine sprach- und/oder bildbasierte Eingabevorrichtung auf. Diese Eingabevorrichtung bildet Teil einer Nutzerschnittstelle, über welcher eine Bedienperson mit der Steuereinrichtung bzw. dem Kanalrohrinspektionssystem kommuniziert und diese bedient. Die sprachbasierte Eingabevorrichtung ist derart ausgebildet, dass sie akustische Kommandos einer Bedienperson als Steuerbefehle erfassen kann. Eine bildbasierte Eingabevorrichtung ist erfindungsgemäß so ausgebildet, dass sie Gesten einer Bedienperson als Steuerbefehle erfassen kann. Die Steuereinrichtung ist zur Steuerung zumindest einer Komponente des Kanalrohrinspektionssystems auf Grundlage dieser erfassten Steuerbefehle ausgebildet. Die Steuerung zumindest einer Komponente des Kanalrohrinspektionssystems, insbesondere eines Inspektionsgerätes bzw. einer Kamera, kann bevorzugt eine der oben näher beschriebenen Aktionen umfassen. Die so mögliche Ton-, Sprach- und/oder Gestensteuerung des Kanalrohrinspektionssystems hat große Vorteile, da es nicht mehr erforderlich ist, Bedienelemente, wie Tastaturen, Joysticks, Touchscreens oder ähnliches mit den Fingern bedienen zu müssen. Dies ist insbesondere im Außeneinsatz, wenn von Bedienpersonen Handschuhe getragen werden, sehr schwierig. So ist beispielsweise mittels Sprach- und/oder Gestensteuerung auch eine Bedienung möglich, ohne zuvor Handschuhe ausziehen zu müssen. Dies erhöht neben dem Bedienkomfort die Arbeitssicherheit, da Schutzkleidung nicht abgelegt werden muss.

Bevorzugt ist die sprach- und/oder bildbasierte Eingabevorrichtung derart ausgebildet, dass solche akustischen Kommandos und/oder erfassten Gesten als Steuerbefehle erfasst werden, die einen Bezug zu einem von der Kamera aufgenommenen Bild haben. Besonders bevorzugt handelt es sich dabei um komplexe Steuerbefehle, welche im Bezug zu zumindest einem von der Kamera im Bild erfassten Objekt stehen bzw. sich auf ein im Bild erfassten Objekt beziehen. Das bedeutet, vorzugsweise ist Teil eines solchen komplexen Steuerbefehls eine Bezugnahme auf ein im Bild erfasstes Objekt. Dies ermöglicht es, eine Steuerung des Kanalrohrinspektionssystem zu bewirken, in welcher durch Gesten oder Sprache auf dem Bildinhalt Bezug genommen werden kann. Die Steuerbefehle sind somit vorzugsweise nicht oder nicht nur einfache Basis-Steuerbefehle, welche vordefinierte Funktionen bewirken, wie beispielsweise ein Hereinzoomen, Herauszoomen oder Verschwenken in vordefinierter Richtung. Gemäß dieser bevorzugten Ausgestaltung kann vielmehr auf den Bildinhalt durch komplexe Steuerbefehle Bezug genommen werden, beispielsweise indem ein solcher komplexer Steuerbefehl bewirkt, dass ein bestimmtes Bildobjekt, wie beispielsweise ein Riss oder ein Abzweig ins Zentrum des Bildes bewegt wird und/oder vergrößert dargestellt wird, ein Riss im Bild verfolgt wird o.ä. Das heißt, der Benutzer kann durch Sprache und/oder Gesten Befehle ausführen, mit welchen er unmittelbar auf das Inspektionsergebnis reagieren kann. Damit wird eine kontextbezogene Sprach- und/oder Gestensteuerung realisiert, welche eine sehr einfache intuitive Bedienung ermöglicht.

So kann die Steuereinrichtung bevorzugt eine Bildverarbeitungseinrichtung aufweisen, welche ein Strukturerkennungsmodul hat, welches dazu ausgebildet ist, in einem von der Kamera aufgenommenen Bild vorbestimmte Strukturen, insbesondere Schäden in oder an einer Wandung eines Kanalrohres, Strukturen im Inneren des Kanalrohres und/oder Abzweigöffnungen in der Wandung eines Kanalrohres zu erkennen. Schäden an der Wandung können z.B. Risse, Löcher oder Abplatzungen sein. Strukturen bzw. Objekte im Inneren des Kanalrohres könnten z.B. Ablagerungen oder in das Kanalrohr hineinragende Wurzeln sein. Das Strukturerkennungsmodul kann dazu geeignete Bildanalysewerkzeuge aufweisen, insbesondere in Form von Softwareapplikationen oder Anwendungen. Diese können direkt in der Steuereinrichtung implementiert oder aber auch auf einem externen Rechner, insbesondere cloudbasiert ausgeführt werden. Die Steuereinrichtung und das Strukturerkennungsmodul können grundsätzlich in beliebige Teile des Kanalrohrinspektionssystems integriert sein, z.B. in ein Bedienmodul, in ein Kameragehäuse, in ein Trägerfahrzeug und/oder z.B. in eine kommunikationsverbundene Recheneinrichtung. Besonders bevorzugt verwendet das Strukturerkennungsmodul Werkzeuge der künstlichen Intelligenz, wie beispielsweise ein neuronales Netz, und kann bevorzugt selbstlernend ausgebildet sein, um bestimmte Strukturen im Kanalrohr, wie Risse, Muffen, Abzweigöffnungen und ähnliches in einem aufgenommenen Bild zu erkennen. Die so erkannten besonderen Strukturen können von der Steuereinrichtung einer Bedienperson auf eine Anzeigeeinrichtung zur Anzeige gebracht werden, beispielsweise, indem sie im Bild automatisiert gekennzeichnet werden. Die genannten Steuerbefehle, die als akustische Kommandos und/oder Gesten erfasst werden, beziehen sich vorzugsweise auf diese erkannten Strukturen. Dabei kann ein Strukturerkennungsmodul derart ausgebildet sein, dass es ständig versucht alle ihm bekannten Strukturen im Bild zu erkennen und die Steuerbefehle auf die bereits erkannten Strukturen Bezug nehmen. Alternativ oder zusätzlich ist es denkbar, das Strukturerkennungsmodul derart auszugestalten, dass es durch die Steuerbefehle dazu veranlasst wird, die durch bestimmte Steuerbefehle definierten Strukturen im Bild zu suchen.

Weiter bevorzugt beinhalten in der Steuereinrichtung hinterlegte und von der Eingabevorrichtung abrufbare Steuerbefehle Objektidentifikationsbefehle, welche ihnen zugeordnete Bildobjekte, wie beispielsweise Löcher, Risse, Abzweigöffnungen, Muffen und ähnliches, welche in einem Bild vom Inneren eines Kanalrohres abgebildet sein können, definieren. Die Objektidentifikationsbefehle können dazu verwendet werden, dass eine Bedienperson durch Verwendung dieser Befehle die Steuereinrichtung dazu veranlasst, die Kamera oder auch ein Bearbeitungswerkzeug gezielt ein so ausgewähltes Objekt ansteuern zu lassen, um dieses z.B. in detaillierten Blick zu nehmen oder aber in geeigneter Weise zu bearbeiten.

Die Steuereinrichtung kann ferner vorzugsweise zur Verarbeitung von Steuerbefehlen in Form von Objektidentifikationsbefehlen in der Weise ausgebildet sein, dass ein Objektidentifikationsbefehl die Markierung eines zugehörigen Objektes in einem von der Kamera erfassten Bild bewirkt, wobei die Steuereinrichtung vorzugsweise so ausgebildet ist, dass ein von einem Objektidentifikationsbefehl definiertes Objekt mit Hilfe eines in der Steuereinrichtung vorhandenen Strukturerkennungsmodul identifiziert wird.

D.h. hier können insbesondere das oben beschriebene Strukturerkennungsmodul und die Eingabevorrichtung zusammenwirken, indem ein Strukturerkennungsmodul im aufgenommenen Bild automatisiert gewisse Strukturen erkennt und eine Bedienperson durch entsprechende Objektidentifikationsbefehle z.B. die Kamera veranlassen kann, bestimmte erkannte Strukturen in den Blick zu nehmen. Zeigt beispielsweise das Bild einen Riss in der Wandung eines Kanalrohres, könnte ein solcher Objektidentifikationsbefehl beispielsweise das gesprochene Wort "Riss" beinhalten, sodass durch ein Kommando wie beispielsweise "Riss betrachten" die Steuereinrichtung dazu veranlasst werden kann, die Kamera so zu verfahren und zu verschwenken, dass ein erkannter Riss in detaillierte Betrachtung genommen wird. Dies wäre bei einer vorgesehen Sprachsteuerung der Fall. Bei einer Gestensteuerung könnte beispielsweise eine bestimmte Geste dem Objekt "Riss" zugeordnet sein, welche mit den Händen ausgeführt wird, um eine entsprechende Funktion zu veranlassen.

Ferner kann die Steuereinrichtung so ausgebildet sein, dass von der Eingabeeinrichtung erkannte Steuerbefehle eine kontextbezogene Funktion haben, beispielsweise eine von einem Objektidentifikationsbefehl abhängige Funktion. So kann beispielsweise eine Kameraeinstellung und/oder Kamerapositionierung objektabhängig eingestellt werden, um ein durch den Objektidentifikationsbefehl ausgewähltes Objekt zu betrachten. Zum Beispiel könnte ein Riss immer in 90°-Draufsicht auf die Wandung betrachtet werden, während zum Blick in einen Abzweig die Kamera mit ihrer Blickrichtung im Winkel des Abzweigs ausgerichtet wird, um in den Abzweig blicken zu können. Zum Betrachten einer Muffe könnte ein Befehl "Betrachten" ferner zum Beispiel ein automatisches Abfahren des Umfangs der Muffe umfassen.

Gemäß einer weiteren möglichen Ausführungsform können die in der Steuereinrichtung hinterlegten und von der Eingabevorrichtung abrufbaren Steuerbefehle Bewegungsbefehle beinhalten, welche ihnen zugeordnete Bewegungen und Aktionen steuern, insbesondere Bewegungen und Aktionen der Kamera, einer Vorschubeinrichtung und/oder von Werkzeugen. So kann beispielsweise eine bestimmte Geste oder ein Kommando wie "vorwärts fahren" die Steuereinrichtung veranlassen, die Vorschubeinrichtung eine Vorwärtsbewegung ausführen zu lassen. Entsprechende Befehle können für verschiedene Schwenkrichtungen, Zoomfunktionen und ähnliches der Kamera vorgesehen sein. Die Steuereinrichtung und die Eingabevorrichtung sind besonders bevorzugt so ausgebildet, dass vorbestimmte Kommandos mit Objektidentifikationsbefehlen, wie sie vorangehend beschrieben wurden, kombinierbar sind. So kann beispielsweise ein Verschwenken der Kamera zu einem im Bild sichtbaren Riss oder ein Abfahren einer erkannten Muffe mit der Kamera über entsprechende Gesten oder Sprachbefehle, wie z.B. "zu Riss schwenken" oder "Muffe abfahren", veranlasst werden.

Vorzugsweise ist, wie vorangehend in Beispielen schon genannt, die zumindest eine Komponente des Kanalrohrinspektionssystems, welche auf Grundlage der erfassten Steuerbefehle gesteuert werden kann, die zumindest eine Kamera oder ein die Kamera tragendes Inspektionsgerät. So kann die Steuereinrichtung derart ausgebildet sein, dass die Steuerbefehle dazu dienen, die Bilderfassung der Kamera zu steuern bzw. zu verändern, beispielsweise die Blickrichtung und/oder die Brennweite der Kamera zu ändern. Es können jedoch auch beliebige andere Funktionen der Kamera über die Steuereinrichtung auf Grundlage der erfassten Steuerbefehle gesteuert werden. Besonders bevorzugt können die Steuerbefehle derart sein, dass über die Steuerbefehle näher zu betrachtende Bildobjekte ausgewählt und mittels der Kamera durch Verschwenken der Blickrichtung genauer in den Blick genommen werden können.

Gemäß einer weiteren bevorzugten Ausführungsform weist die Kamera eine Positioniereinrichtung auf bzw. ist an einer Positioniereinrichtung befestigt. Die Positioniereinrichtung weist bevorzugt eine oder mehrere Bewegungsachsen und weiter bevorzugt Schwenkachsen auf. Die Positioniereinrichtung wird von der Steuereinrichtung bei dieser Ausgestaltung zum Bewegen der Kamera gesteuert, d.h. insbesondere auf Grundlage der erfassten Steuerbefehle gesteuert. So kann die Steuereinrichtung über die Positioniereinrichtung die Kamera bewegen bzw. verschwenken, je nachdem welche Steuerbefehle erfasst werden. Alternativ oder zusätzlich zu einer Bewegung der Kamera über eine Positioniereinrichtung kann auch ein die Kamera tragendes Inspektionsgerät als Ganzes in einem Kanalrohr oder Schacht bewegt werden, um die Blickrichtung der Kamera zu verändern. Das Inspektionsgerät kann z.B. ein Fahrwagen, eine Vorschubeinrichtung mit Schiebestab oder z.B. auch ein Flug- oder Schwimmgerät sein, welches sich weiter bevorzugt frei bewegen und drehen kann.

Gemäß einer weiteren möglichen Ausführungsform weist die Kamera eine Positioniereinrichtung mit zumindest einer mechanischen Schwenkachse auf bzw. ist die Kamera an einer Positioniereinrichtung mit zumindest einer mechanischen Schwenkachse befestigt. Die Schwenkachse weist dabei bevorzugt einen von der Steuereinrichtung gesteuerten Schwenkantrieb, beispielsweise einen elektromotorischen Schwenkantrieb auf. So kann die Kamera durch Ansteuerung über die Steuereinrichtung um die Schwenkachse verschwenkt werden. Dies erfolgt vorzugsweise auf Grundlage der erfassten Steuerbefehle, wie sie oben beschrieben wurden.

Gemäß einer besonderen Ausführungsform weist die Steuereinrichtung einer Bildverarbeitungseinrichtung auf, welche dazu ausgebildet ist, dass zur Veränderung eines Blickfeldes der Kamera ein Bildausschnitt in einem von der Kamera aufgenommenen Gesamtbild verändert wird. So kann ein virtuelles Verschwenken bzw. Bewegen der Kamera ohne mechanische Bewegungs- bzw. Schwenkachse erreicht werden, indem lediglich ein kleinerer Bildausschnitt in einem großen Gesamtbild, welches von der Kamera aufgenommen wird, bewegt wird. Dazu ist es besonders vorteilhaft, wenn die Kamera ein Objektiv mit einem großen Blickwinkel, insbesondere ein fisheye-Objektiv aufweist. Die virtuelle Änderung des Blickfeldes kann insbesondere auch eine elektronische Zoomfunktion einschließen, bei welcher ein bestimmter Bildausschnitt vergrößert wiedergegeben wird.

Gemäß einer Ausführungsform ist die sprach- und/oder bildbasierte Eingabevorrichtung derart ausgebildet, dass sie in einem erfassten akustischen oder optischen Signalbild vordefinierte Steuerbefehle, bei welchen es sich auch um die zuvor beschriebenen Objektidentifikationsbefehle handeln kann, erkennt und einen erkannten Steuerbefehl in der Steuereinrichtung zur Ausführung bringt. Dies kann eine direkte Ausführung der Steuerbefehle beinhalten. Alternativ wäre es möglich, eine Bedienperson die erkannten Steuerbefehle vorab noch einmal zur Bestätigung anzuzeigen, um Fehlbedienungen bzw. Fehlsteuerungen zu verhindern.

Weiter bevorzugt weist die Eingabevorrichtung eine Bilderkennungsvorrichtung auf, welche in einem von einer Kamera aufgenommenen Bild vordefinierte Gesten erkennt. Dazu weist die Eingabeeinrichtung bevorzugt eine Eingabekamera auf, welche so angeordnet ist, dass sie eine Bedienperson in den Blick nehmen kann und Gesten der Bedienperson im Bild erfassen kann. Die Bilderkennungsvorrichtung ist dazu ausgebildet, vorbestimmte oder zuvor angelernte Gesten zu erkennen. Auch dies kann mit Hilfe künstlicher Intelligenz oder neuronalen Netzwerken oder anderen geeigneten Bilderkennungswerkzeugen erfolgen. Diese können als Softwareapplikationen direkt in der Steuereinrichtung zur Anwendung gebracht werden. Alternativ oder zusätzlich ist auch eine Verarbeitung der Bilddaten auf einer externen Recheneinrichtung möglich, beispielsweise als cloudbasierte Anwendung.

Gemäß einer weiteren möglichen Ausführungsform der Erfindung weist die Eingabevorrichtung eine Geräusch- und/oder Spracherkennungsvorrichtung auf, welche in einem von einem Mikrofon erfassten akustischen Signal vordefinierte akustische Kommandos erkennt. Dies können Sprachkommandos, aber auch Kommandos in Form von Tönen oder Geräuschen sein. Die Eingabevorrichtung kann dazu ein geeignetes Mikrofon aufweisen oder mit einem Mikrofon, welches eine Bedienperson trägt, beispielsweise in Form eines Headsets, verbunden sein. Die Geräusch- und/oder Spracherkennungsvorrichtung kann geeignete Geräusch- und/oder Spracherkennungswerkzeuge, beispielsweise auch unter Verwendung von künstlicher Intelligenz aufweisen. Diese Erkennungswerkzeuge können als Softwareapplikationen ebenfalls direkt in der Steuereinrichtung ausgeführt werden oder aber auf einer verbundenen Recheneinheit, beispielsweise auch als cloudbasierte Applikation.

Die akustischen Kommandos, welche von der Eingabevorrichtung erkennbar sind, sind bevorzugt Wörter oder Wortfolgen. Solche sind von einer Bedienperson leicht erlernbar und entsprechen vorzugsweise dem üblichen Sprachgebrauch, sodass besonders bevorzugt übliche Sprache verstanden werden kann. So können auch verschiedene Worte oder Wortfolgen identischen Steuerbefehlen, bei welchen es sich auch um die zuvor beschriebenen Objektidentifikationsbefehle handeln kann, zugeordnet sein, sodass verschiedene Ausdrucksweisen einer Bedienperson richtig verstanden werden können. Um die Sprachsteuerung zu verbessern, kann die sprachbasierte Eingabevorrichtung lernfähig oder konfigurierbar ausgebildet sein, sodass sie sich beispielsweise an die Sprache einer bestimmten Bedienperson anpassen kann. Dies kann ggf. eine entsprechende Anlernprozedur beinhalten.

Gemäß einer weiteren möglichen Ausführungsform sind die von der bildbasierten Eingabevorrichtung erfassbaren Gesten vorzugsweise Gesten, welche mit Fingern, Händen und/oder Armen, verschiedenen Gesichtsausdrücken und/oder Körperhaltung darstellbar sind und/oder Bewegungsabläufe, welche mit Fingern, Händen und/oder Armen, verschiedenen Gesichtsausdrücken und/oder Körperhaltung darstellbar sind. Dies können vorgegebene Gesten sein. Auch Augenbewegungen und/oder eine Blickrichtung der Augen könnten beispielsweise als Gesten erfasst werden. Beispielsweise könnte eine Kamera gemäß der Augenblickrichtung verschwenkt und/oder fokussiert werden. In einer besonderen Ausführungsform kann die Eingabevorrichtung auch hinsichtlich der Gestensteuerung lernfähig ausgebildet sein, sodass die Zuordnung bestimmter Gesten zu bestimmten Steuerbefehlen individuell anlernbar sein kann, damit eine Bedienperson Gesten verwenden kann, welche sie sich gut merken und für sie leicht ausführbar sind.

Die Eingabevorrichtung weist, wie oben beschrieben, zweckmäßigerweise zumindest ein Mikrofon und/oder zumindest einen Sensor, welcher Bewegungen oder Gesten einer Bedienperson erfassen kann, bevorzugt zumindest eine Kamera, auf, um die sprach- und/oder bildbasierte Eingaben mit deren Hilfe erfassen zu können. Als zumindest ein Mikrofon können dabei wie beschrieben externe Komponenten, wie ein Headset verwendet werden. Die zumindest eine Kamera ist vorzugsweise in einer Bedienoberfläche der Steuereinrichtung so eingebaut, dass sie eine gegenüber der Bedienoberfläche befindliche Bedienperson im Blick hat. Als zumindest eine Kamera kann beispielsweise auch die Kamera eines üblichen PC, Notebook oder Tabletcomputer verwendet werden. Alternativ oder zusätzlich können andere geeignete Sensoren, wie zum Beispiel zumindest ein Abstandsensor, zumindest eine 3D-Kamera oder zumindest eine time-of-flight-Kamera Verwendung finden. Auch könnten Bewegungen bzw. Gesten auch durch direkt am Körper zu tragende Sensoren erfasst werden, beispielsweise in Form zumindest eines Datenhandschuhs, welcher Handbewegungen erfasst, oder einer Brille mit Sensoren, welche die Blickrichtung erfassen. Auch könnten Kleidungsstücke wie z.B. Handschuhe mit Markern (z.B. optischen Markern) ausgestattet sein, deren Position und/oder Bewegung von Sensoren und/oder Kameras erfasst werden.

Neben dem vorangehenden Kanalrohrinspektionssystem ist Gegenstand der Erfindung, ein Verfahren zur Steuerung eines Kanalrohrinspektionssystems, insbesondere eines Kanalrohrinspektionssystems, wie es vorangehend beschrieben wurde. Vorangehend beschriebene Verfahrensabläufe sind ebenfalls als bevorzugte Varianten des erfindungsgemäßen Verfahrens zu verstehen. Umgekehrt sind nachfolgend beschriebene bevorzugte Ausgestaltungen des Verfahrens ebenfalls als bevorzugte Ausführungsformen des erfindungsgemäßen Kanalrohrinspektionssystems zu verstehen.

Gemäß dem erfindungsgemäßen Verfahren werden in der Steuerung eines Kanalrohrinspektionssystems Gesten einer Bedienperson optisch erfasst und/oder es werden akustische Kommandos einer Bedienperson erfasst. Die erfassten optischen und/der akustischen Signale bzw. Kommandos werden auf vorbestimmte Steuerbefehle analysiert. Wenn ein der Steuereinrichtung vorbekannter bzw. vorbestimmter Steuerbefehl erkannt wird, wird zumindest eine Komponente des Kanalrohrinspektionssystems im Anschluss basierend auf bzw. gemäß dem zumindest einen erkannten Steuerbefehl gesteuert. Dies kann beispielsweise die Bewegung eines Inspektionsgerätes und/oder die Bewegung eines Werkzeuges sein. Bei solchen Inspektionsgeräten oder Werkzeugen kann es sich beispielsweise um eine Kamera, ein Sanierungswerkzeug, einen Fräser o.ä. handeln. Die den Steuerbefehlen zugeordneten optischen Gesten oder akustischen Kommandos können in einer Steuereinrichtung hinterlegt werden, wobei sie fest vorgegeben sein können oder auch von einer Bedienperson anlernbar sein können, um sie den eigenen Bedürfnissen anpassen zu können.

Bevorzugt benennen die Steuerbefehle Bildstrukturen in einem von einer Kamera des Kanalrohrinspektionssystems in einem Kanalrohr aufgenommenen Bild, d.h. in dem Bild dargestellte Strukturen bzw. Objekte, und die Steuerbefehle definieren Aktionen in Bezug auf diese Bildstrukturen. So kann, wie oben beschrieben, beispielsweise durch Sprachkommandos und/oder Gesten ein im Bild sichtbares Objekt, wie beispielsweise ein Riss oder ein Abzweig von der Kamera "angefahren" werden, sodass dieses Objekt beispielsweise in die Bildmitte des von der Kamera aufgenommenen Bildes gebracht wird und ggf. vergrößert dargestellt wird, um von der Bedienperson genauer betrachtet werden zu können. D.h. das Verfahren ermöglicht eine kontextbezogene Sprach- und/oder Gestensteuerung, welche Aktionen veranlasst, welche sich auf im Bild erkennbare Strukturen oder Objekte beziehen. Die Strukturen oder Objekte sind dabei, wie oben beschrieben, durch Steuerbefehle in Form von Objektidentifikationsbefehlen über akustische und/oder optische Kommandos identifizierbar.

Die zumindest eine gesteuerte Komponente kann zumindest eine Kamera sein, wobei die Steuerung bevorzugt eine Bewegung der Kamera betrifft. So können Aktionen der Kamera über die akustischen Kommandos oder optischen Gesten gesteuert werden, beispielsweise ein Verschwenken, Heranzoomen, Drehen, Belichtungseinstellungen etc. Die Steuerung durch Töne, Sprache und/oder Gesten hat den Vorteil, dass dies von einer Bedienperson berührungslos möglich ist, sodass beispielsweise die Bedienung ohne vorheriges Ablegen von Schutzkleidung, wie von Handschuhen, leicht durchführbar ist.

Besonders bevorzugt ist eine automatisierte Strukturerkennung in einem von zumindest einer Kamera des Kanalrohrinspektionssystems aufgenommenen Bild vorgesehen, welche vorbestimmte Strukturen, beispielsweise Schäden in einer Wandung eines Kanalrohres und/oder beispielsweise Abzweigöffnungen in der Wandung eines Kanalrohres erkennt. Dies kann die Grundlage dafür sein, im nächsten Schritt diese Strukturen der weiteren Steuerung, beispielsweise durch akustische Kommandos, Sprachbefehle und/oder Gesten zugrunde zu legen. Zeigt beispielsweise ein aufgenommenes Bild eine Abzweigöffnung, so wird dies von dem automatisierten Strukturerkennung automatisch erkannt und die Steuereinrichtung weiß somit, dass das Bild und an welcher Stelle das Bild, die Abzweigöffnung zeigt. Wenn nun die Bedienperson einen entsprechenden Steuerbefehl über Sprache oder Gesten eingibt, welcher auf diese Abzweigöffnung Bezug nimmt, kann die Steuereinrichtung im nachfolgenden Schritt z.B. eine entsprechende Aktion mit Bezug zu dem erfassten Objekt durchführen. So kann die Bedienperson beispielsweise einfach ein Kommando geben, wie "Abzweigöffnung in den Blick nehmen" woraufhin das Kanalrohrinspektionssystem ein Inspektionsgerät und/oder eine Kamera im Kanalrohr so bewegt, dass die ausgewählte Abzweigöffnung genau in den Blick genommen wird.

So kann die Strukturerkennung bevorzugt durch erkannte Steuerbefehle gesteuert werden und/oder die Steuerbefehle können sich z.B. als Objektidentifikationsbefehle auf bekannte, d.h. zuvor in einer Steuereinrichtung hinterlegte Strukturen beziehen. So wird eine sehr intuitive berührungslose Steuerung des gesamten Kanalrohrinspektionssystems, bevorzugt durch natürliche Sprache und/oder leicht verständliche Gesten, möglich.

Nachfolgend wird die Erfindung beispielhaft anhand der beigefügten Figuren beschrieben. In diesen zeigt:
- Fig. 1: schematisch ein Kanalrohrinspektionsgerät in einem Kanalrohr und
- Fig. 2: schematisch die Bilddarstellung.

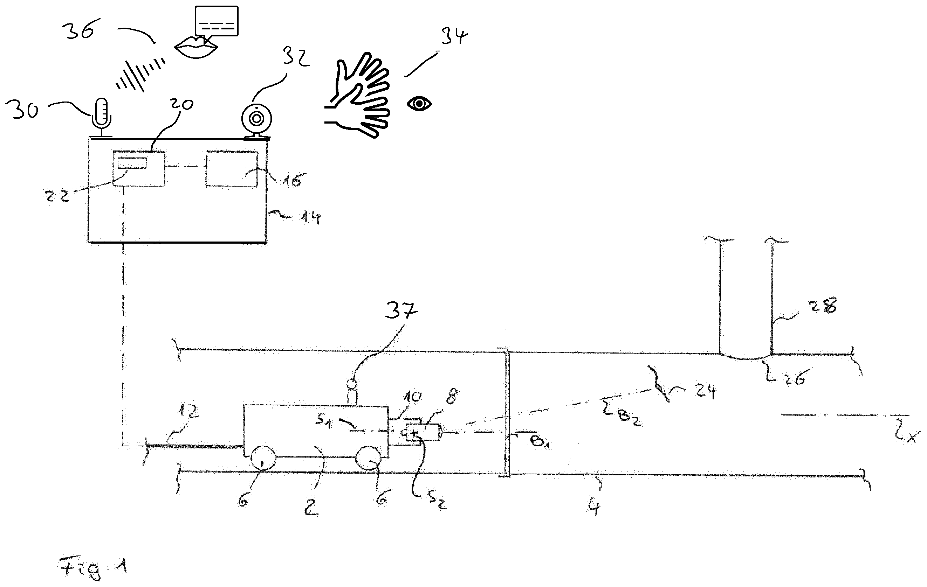

In Figur 1 ist schematisch ein Kanalrohrinspektionsgerät in Form eines Fahrwagens 2 dargestellt, welcher sich in einem Kanalrohr 4 befindet. Der Fahrwagen 2 ist über seine angetriebenen Räder 6 in der Längsrichtung X des Kanalrohres 4 in diesem verfahrbar. Der Fahrwagen 2 bildet somit eine Vorschubeinrichtung für die an dem Fahrwagen 2 befestigte Kamera 8. Die Kamera 8 ist über eine Positioniereinrichtung 10 an dem Fahrwagen 2 befestigt. Anstelle eines Fahrwagens 2 könnte die Kamera 8 auch am vorderen Ende eines Schiebestabes, welcher als Vorschubeinrichtung fungiert, angeordnet sein. Anstelle eines Fahrwagens 2 könnten ferner auch beliebige andere Vorschubeinrichtungen wie z.B. ein Kabel, Vortriebsdüsen, ein schwimmendes Inspektionsgerät oder ein fliegendes Inspektionsgerät verwendet werden. Die Positioniereinrichtung 10 weist angetriebene Schwenkachsen S, in diesem Beispiel zwei Schwenkachsen S₁ und S₂ auf, um welche die Kamera 8 verschwenkbar ist. Die Schwenkachse S₁ erstreckt sich dabei parallel zur Vorschubrichtung X. Die Schwenkachse S₂ ist normal zu der Schwenkachse S₁ gerichtet. Beide Schwenkachsen S₁ und S₂ weisen vorzugsweise motorische, insbesondere elektromotorische Antriebe auf. In dem in Figur 1 gezeigten Zustand ist die Kamera 8 so gerichtet, dass ihre Blickrichtung B in einer ersten Blickrichtung B₁ parallel zur Vorschubrichtung X gerichtet ist. Die Kamera 8 weist vorzugsweise eine weitere Schwenkachse auf, welche es ermöglicht, das Bild um die Achse der Blickrichtung B zu drehen, um stets eine lagerichtige Ausrichtung des Bildes sicherzustellen, auch wenn die Kamera um eine der anderen Schwenkachsen S₁, S₂ verschwenkt wird.

Der Fahrwagen 2 ist in diesem Beispiel über ein Kabel 12 mit einer Steuereinrichtung 14 verbunden. Anstelle des Kabels 2 könnten aber auch andre Kommunikationsverbindungen wie z.B. eine Funkverbindung zum Einsatz kommen. Die Steuereinrichtung 14 dient zur Steuerung, insbesondere Fernsteuerung des Fahrwagens 2 mit der Kamera 8 im Kanalrohr 4, wobei in diesem Beispiel die Steuereinrichtung 14 außerhalb des Kanalrohres angeordnet ist. Die Steuereinrichtung 14 beinhaltet gemäß dieser Ausführungsform eine Anzeigeeinrichtung 16 in Form eines Displays. Auf der Anzeigeeinrichtung 16 wird das von der Kamera 8 aufgenommene Bild dargestellt. Die Steuereinrichtung 14 ist in diesem Beispiel ferner mit einer Bildverarbeitungseinrichtung 20 ausgestattet, welche ein Strukturerkennungsmodul 22 aufweist. Die Bildverarbeitungseinrichtung 20 kann eine eigene Hardwarekomponente aufweisen, aber auch vorzugsweise lediglich als Softwareapplikation bzw. Softwaremodul in der Steuersoftware der Steuereinrichtung 14 ausgebildet sein. Die Steuereinrichtung 14 könnte ganz oder teilweise auch an andere Stelle angeordnet sein, beispielsweise in den Fahrwagen 2 oder ein Kameragehäuse integriert sein. Auch die Bildverarbeitungseinrichtung 20 könnte an anderer Stelle angeordnet sein, beispielsweise auch getrennt von der Steuereinrichtung 14 und mit dieser zur Kommunikation in geeigneter Weise verbunden sein. Auch könnte das Strukturerkennungsmodul 22 von der Bildverarbeitungseinrichtung 20 getrennt angeordnet und zur Kommunikation verbunden sein.

Zur Inspektion des Kanalrohres 4 wir der Fahrwagen 2 in Längsrichtung X durch das Kanalrohr 4 gefahren und dabei wird mit der Kamera 8 die Innenwandung des Rohres und der Innenraum des Kanalrohres 4 aufgenommen. Dabei kann die Kamera 8, wie in Figur 1 gezeigt, beispielsweise zunächst nach vorne, d. h. in einer Blickrichtung B₁ parallel zur Vorschubachse X gerichtet sein. Wenn nun ein zu beobachtendes Objekt, wie in diesem Beispiel der schematisch dargestellte Riss 24 oder beispielsweise die Einmündung 26 des gezeigten Abzweiges 28, näher betrachtet werden soll, kann die Blickrichtung B durch Verschwenken der Kamera 8 und Bewegen des Fahrwagens 2 so geändert werden, dass das Bildobjekt besser betrachtet werden kann, insbesondere beispielsweise in die Mitte des Blickfeldes bewegt wird. Hierzu kann beispielsweise die Kamera 8 um die Schwenkachse S₂ so verschwenkt werden, dass die Blickrichtung B von der Blickrichtung B₁ in die Blickrichtung B₂ in Richtung auf den Riss 24 geändert wird. Um ein Bildobjekt wie den Riss 24 näher in den Blick zu nehmen, könnte gleichzeitig der Fahrwagen 2 weiter in Richtung der Längsachse X vorgefahren werden und die Kamera 8 um die Schwenkachse S₂ weiter in radiale Richtung verschwenkt werden, so dass am Ende die Blickrichtung B im Wesentlichen radial zur Längsachse X gerichtet ist. Über die Schwenkachse S₁ kann dabei die Kamera 8 in der Umfangsrichtung so verschwenkt werden, dass die Blickrichtung B auf die richtige Umfangsposition gerichtet ist, um das Bildobjekt wie den Riss 24 optimal ins Bild nehmen zu können. Darüber hinaus kann die Schwenkachse in der Blickrichtung B der Kamera 8 so verschwenkt werden, dass ein lagerichtiges Bild erhalten bleibt. Die hierzu erforderlichen Verfahr- und Schwenkbewegungen werden von der Steuereinrichtung 14 berechnet und der Fahrwagen 2, die Positioniereinrichtung 10 und die Kamera 8 so angesteuert, dass die erforderlichen Verfahr- und Schwenkbewegungen ausgeführt werden.

Die Steuereinrichtung 14 weist eine Eingabevorrichtung auf, welche zur akustischen Steuerung, insbesondere Sprachsteuerung und/oder Gestenerkennung ausgebildet ist. In diesem Beispiel weist die Steuereinrichtung 14 sowohl eine Möglichkeit der Ton- bzw. Spracherkennung als auch die Möglichkeit einer Gestenerkennung auf. Es ist jedoch zu verstehen, dass auch lediglich eine dieser Möglichkeiten vorgesehen sein könnte. Zur Spracherkennung ist die Steuereinrichtung 14 mit zumindest einem Mikrophon 30 ausgestattet. Zur Gestenerkennung weist die Steuereinrichtung 14 zumindest eine Kamera 32 auf, welche so gerichtet ist, dass sie eine Bedienperson in den Blick nimmt und von dieser z.B. mit den Händen und/oder den Augen ausgeführte Gesten 34 erkennen kann. Diese Gesten können beispielsweise Handstellungen und/oder Handbewegungen, aber zum Beispiel auch die Blickrichtung der Augen sein. Grundsätzlich kommen hier alle denkbaren Gesten in Frage, welche über Sensoren erfassbar sind, wie z.B. mittels der zumindest einen Kamera 32. Das Mikrofon 30 ist so angeordnet, dass es von der Bedienperson erzeugte oder gesprochene akustische Kommandos 36 erfassen kann. Die Steuereinrichtung 14 ist so ausgebildet, dass sie in dem von der Kamera 32 aufgenommenen Bild vorbestimmte Gesten 34 erkennen kann. Den vorbestimmten Gesten 34 sind Steuerbefehle zugeordnet, welche von der Steuereinrichtung 14 zur Steuerung des Fahrwagens 2 und insbesondere der Kamera 8 sowie deren Positioniereinrichtung 10 umgesetzt werden können. Alternativ oder zusätzlich könnte ein Bearbeitungswerkzeug wie ein Fräser 36 gesteuert werden. Alternativ oder zusätzlich ist die Steuereinrichtung 14 ausgebildet, in den von dem Mikrofon 30 aufgenommenen Geräuschsignalen Sprachsignale 36 in Form von Wörtern oder Wortfolgen als vorbestimmte akustische Kommandos zu erkennen, denen ebenfalls Steuerbefehle zugeordnet sind, welche beispielsweise den Fahrwagen 2, die Positioniereinrichtung 10, die Kamera 8 oder ein Werkzeug für den Fräser 36 steuern. Die Steuerbefehle können mit den zugeordneten Gesten 34 oder akustischen Kommandos 36 fest hinterlegt sein. Alternativ kann die Steuereinrichtung 14 so ausgebildet sein, dass die Gesten 34 und akustischen Kommandos 36 anlernbar sind, d.h. von einem Nutzer einzelnen Steuerbefehlen selbst zugeordnet werden können. Die erforderliche Bildauswertung zum Erkennen der Gesten 34 und die Analyse der aufgenommenen akustischen Signale zum Erkennen der akustischen Kommandos 36 kann in der Steuereinrichtung 14 beispielsweise durch eine entsprechende Geräusch- bzw. Spracherkennungsvorrichtung und/oder eine geeignete Bilderkennungsvorrichtung erfolgen. Alternativ oder zusätzlich kann die Auswertung auch über einen entfernt angeordneten Rechner, beispielsweise cloudbasiert erfolgen.

Die Verwendung von gestenbasierten oder tonbasierten bzw. sprachbasierten Steuerbefehlen ist insbesondere in Kombination mit dem Strukturerkennungsmodul 22 vorteilhaft. Das Strukturerkennungsmodul 22 ist dazu ausgebildet, in einem von der Kamera 8 aufgenommenen Bild 38 automatisiert bestimmte für die Begutachtung von Kanalrohren wesentliche Strukturen zu erkennen. Dies kann beispielsweise ein Riss 24 oder eine Einmündung 26 eines Abzweiges 28 sein. Diese werden im aufgenommenen Bild von dem Strukturerkennungsmodul 22 erkannt und deren Lage in dem aufgenommenen Bild elektronisch markiert. Wenn nun eine Bedienperson auf der Anzeigeeinrichtung 16 das aufgenommene Bild betrachtet und dort Strukturen erkennt, welche sie näher betrachten oder möglicherweise bearbeiten möchte, so kann sie diese Strukturen dann über entsprechende Steuerbefehle, welche die Strukturen bzw. Objekte bezeichnende Objektidentifikationsbefehle umfassen und welche durch Gesten 34 oder akustische Kommandos 36 eingegeben werden, auswählen und eine gewünschte Aktion, wie z.B. eine nähere Betrachtung, welche ein Verfahren und Verschwenken der Kamera 8 erfordert, veranlassen.

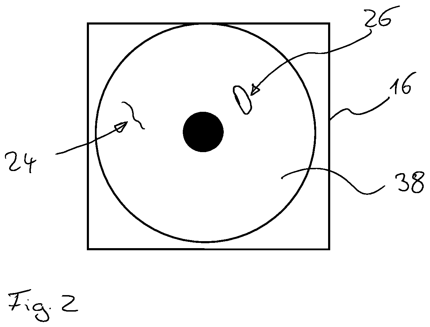

Ein solches Bild 38 auf der Anzeigevorrichtung 16 ist schematisch in Figur 2 gezeigt. Die Bedienperson kann beispielsweise, wenn sie den Riss 24 näher betrachten möchte, eine entsprechende Geste 34 ausführen, welcher in der Steuereinrichtung 14 der Steuerbefehl "Anfahren des erkannten Risses" zugeordnet ist. Alternativ kann die Bedienperson beispielsweise ein Kommando wie "erkannten Riss näher betrachten" aussprechen, wobei dieses Kommando dann von der Steuereinrichtung 14 erkannt wird und entsprechenden Steuerbefehlen zugeordnet wird, welche den Fahrwagen 2 veranlassen entsprechend in Richtung der Vorschubachse X vorzufahren. Gleichzeitig wird die Positioniereinrichtung 10 veranlasst, die Kamera 8 um die Achse S in die zweite Blickrichtung B zu verschwenken, sodass der Riss 24 näher betrachtet wird, wie es oben bereits beschrieben wurde. Dies ermöglicht insgesamt eine berührungslose kontextbezogene Steuerung des Kanalinspektionssystems, welche es einer Bedienperson sehr einfach macht, bestimmte Strukturen oder Objekte, welche im Kamerabild 38 erkannt werden, näher zu betrachten und ggf. Bearbeitungsvorgänge durch entsprechende Kommandos wie beispielsweise "Fräser starten", "vorwärts fahren", "rückwärts fahren" etc. zu steuern. Grundsätzlich sind alle von dem Fahrwagen 2, der Kamera 8, der Positioniereinrichtung 10 und möglichen Werkzeugen ausführbare Funktionen über entsprechende Steuerbefehle, welche Gesten oder akustischen Kommandos 36 zugeordnet werden, steuerbar. Bevorzugt nehmen die Steuerbefehle dabei Bezug auf im Bild erkannte Strukturen bzw. Objekte.

### Bezugszeichenliste

- 2: Fahrwagen
- 4: Kanalrohr
- 6: Räder
- 8: Kamera
- 10: Positioniereinrichtung
- 12: Kabel
- 14: Steuereinrichtung
- 16: Anzeigeeinrichtung
- 20: Bildverarbeitungseinrichtung
- 22: Strukturerkennungsmodul
- 24: Riss
- 26: Einmündung
- 28: Abzweig
- 30: Mikrofon
- 32: Kamera
- 34: Geste
- 36: akustisches Kommando, Sprachbefehl
- 37: Fräser
- 38: Bild

- X: Vorschubachse
- B, B₁, B₂: Blickrichtungen
- S, S₁, S₂: Schwenkachsen

## Patentansprüche

1. Kanalrohrinspektionssystem mit einer Vorschubeinrichtung (2), zumindest einer an dieser befestigten Kamera (8) sowie einer Steuereinrichtung (14), **dadurch gekennzeichnet, dass** die Steuereinrichtung eine sprach- und/oder bildbasierte Eingabevorrichtung (30, 32) aufweist, welche ausgebildet ist, akustische Kommandos (36) und/oder erfasste Gesten (34) einer Bedienperson als Steuerbefehle zu erfassen, und die Steuereinrichtung (14) zur Steuerung zumindest einer Komponente des Kanalrohrinspektionssystems auf Grundlage dieser erfassten Steuerbefehle ausgebildet ist.

2. Kanalrohrinspektionssystem nach Anspruch 1, **dadurch gekennzeichnet, dass** die sprach- und/oder bildbasierte Eingabevorrichtung (30, 32) derart ausgebildet ist, dass sie akustische Kommandos (36) und/oder erfasste Gesten (34) einer Bedienperson als Steuerbefehle erfasst, welche in Bezug zu einem von der Kamera (8) aufgenommen Bild und vorzugsweise in Bezug zu zumindest einem von der Kamera im Bild erfassten Objekt stehen.

3. Kanalrohrinspektionssystem nach Anspruch 1 oder 2, **dadurch gekennzeichnet, dass** die Steuereinrichtung (14) eine Bildverarbeitungseinrichtung (20) aufweist, welche ein Strukturerkennungsmodul (22) hat, welches dazu ausgebildet ist, in einem von der Kamera (8) aufgenommen Bild (38) vorbestimmte Strukturen (24, 26), insbesondere Schäden (24) in oder an einer Wandung eines Kanalrohres (4), Strukturen im Inneren eines Kanalrohres (4) und/oder Abzweigöffnungen (26) in der Wandung eines Kanalrohres (4) zu erkennen.

4. Kanalrohrinspektionssystem nach einem der vorangehenden Ansprüche, **dadurch gekennzeichnet, dass** in der Steuereinrichtung (14) hinterlegte und von der Eingabevorrichtung abrufbare Steuerbefehle, Objektidentifikationsbefehle (24, 26) beinhalten, welche ihnen zugeordnete Bildobjekte wie zum Beispiel Löcher, Risse, Abzweigöffnungen, Muffen definieren.

5. Kanalrohrinspektionssystem nach einem der vorangehenden Ansprüche, **dadurch gekennzeichnet, dass** die Steuereinrichtung (14) zur Verarbeitung von Steuerbefehlen in Form von Objektidentifikationsbefehlen in der Weise ausgebildet ist, dass ein Objektidentifikationsbefehl die Markierung eines zugehörigen Objektes (24, 26) in einem von der Kamera (8) erfassten Bild (38) bewirkt, wobei die Steuereinrichtung (14) vorzugsweise so ausgebildet ist, dass ein von einem Objektidentifikationsbefehl definiertes Objekt (24, 26) mithilfe eines in der Steuereinrichtung vorhandenen Strukturerkennungsmodul (22) identifiziert wird.

6. Kanalrohrinspektionssystem nach einem der vorangehenden Ansprüche, **dadurch gekennzeichnet, dass** in der Steuereinrichtung (14) hinterlegte und von der Eingabevorrichtung abrufbare Steuerbefehle, Bewegungsbefehle beinhalten, welche ihnen zugeordnete Bewegungen und Aktionen, bevorzugt der Kamera (8), der Vorschubeinrichtung (2) und/oder von Werkzeugen (37), steuern.

7. Kanalrohrinspektionssystem nach einem der vorangehenden Ansprüche, **dadurch gekennzeichnet, dass** die zumindest eine Komponente des Kanalrohrinspektionssystems die zumindest eine Kamera (8) oder ein die Kamera (8) tragendes Inspektionsgerät ist.

8. Kanalrohrinspektionssystem nach einem der vorangehenden Ansprüche, **dadurch gekennzeichnet, dass** die Kamera (8) eine Positioniereinrichtung (10) mit einer oder mehreren Bewegungsachsen und vorzugsweise Schwenkachsen (S) aufweist, welche von der Steuereinrichtung (14) zum Bewegen der Kamera (8) gesteuert wird, wobei vorzugsweise die Kamera (8) eine Positioniereinrichtung (10) mit zumindest einer mechanischen Schwenkachse (5) mit einem von der Steuereinrichtung (14) gesteuerten Schwenkantrieb aufweist und/oder vorzugsweise die Steuereinrichtung (14) eine Bildverarbeitungseinrichtung (20) aufweist, welche derart ausgebildet ist, dass zur Veränderung eines Blickfeldes der Kamera (8) ein Bildausschnitt in einem von der Kamera (8) aufgenommen Gesamtbild verändert wird.

9. Kanalrohrinspektionssystem nach einem der vorangehenden Ansprüche, **dadurch gekennzeichnet, dass** die sprach- und oder bildbasierte Eingabevorrichtung (30, 32) derart ausgebildet ist, dass sie in einem erfassten akustischen (36) oder optischen Signalbild (34) vordefinierte Steuerbefehle erkennt und einen erkannten Steuerbefehl in der Steuereinrichtung (14) zur Ausführung bringt.

10. Kanalrohrinspektionssystem nach einem der vorangehenden Ansprüche, **dadurch gekennzeichnet, dass** die Eingabevorrichtung (30, 32) eine Bilderkennungsvorrichtung aufweist, welche in einem von zumindest einer Kamera (32) aufgenommen Bild vordefinierte Gesten (34) erkennt, und/oder dass die Eingabevorrichtung eine Geräusch- und/oder Spracherkennungsvorrichtung aufweist, welche in einem von zumindest einem Mikrofon (30) erfassten akustischen Signal vordefinierte akustische Befehle (36) erkennt.

11. Kanalrohrinspektionssystem nach einem der vorangehenden Ansprüche, **dadurch gekennzeichnet, dass** die akustischen Kommandos (36) Wörter oder Wortfolgen sind und/oder dass die Gesten (34) mit Fingern, Händen und/oder Armen, verschiedenen Gesichtsausdrücken, Augenbewegungen und/oder Körperhaltungen darstellbare Gesten und/oder Bewegungsabläufe sind.

12. Kanalrohrinspektionssystem nach einem der vorangehenden Ansprüche, **dadurch gekennzeichnet, dass** die Eingabevorrichtung zumindest ein Mikrofon (30) und/oder zumindest einen Bewegungen einer Bedienperson erfassenden Sensor, vorzugsweise zumindest eine Kamera (32), aufweist.

13. Verfahren zur Steuerung eines Kanalrohrinspektionssystems, **dadurch gekennzeichnet, dass** Gesten (34) einer Bedienperson optisch erfasst werden und/oder akustische Kommandos (36) einer Bedienperson erfasst werden, die erfassten optischen und/oder akustischen Signale auf vorbestimmte Steuerbefehle analysiert werden und zumindest eine Komponente des Kanalrohrinspektionssystems basierend auf zumindest einem erkannten Steuerbefehl gesteuert wird.

14. Verfahren nach Anspruch 13, **dadurch gekennzeichnet, dass** die Steuerbefehle Bildstrukturen (24, 26) in einem von einer Kamera (8) des Kanalrohrinspektionssystems in einem Kanalrohr aufgenommenen Bildes (38) benennen und Aktionen in Bezug auf diese Bildstrukturen (24, 26) definieren.

15. Verfahren nach einem der Ansprüche 13 oder 14, **dadurch gekennzeichnet, dass** eine automatisierte Strukturerkennung in einem von zumindest einer Kamera (8) des Kanalrohrinspektionssystems aufgenommen Bild (38) vorbestimmte Strukturen, beispielsweise Schäden (24) in einer Wandung eines Kanalrohres (4) und/oder Abzweigöffnungen (26) in der Wandung eines Kanalrohres (4) erkannt werden, wobei vorzugsweise die Strukturerkennung durch erkannte Steuerbefehle gesteuert wird und/oder die Steuerbefehle sich auf erkannte Strukturen (24, 26) beziehen.
